# EUROPEAN PATENT SPECIFICATION

(11) **EP 3 454 202 B1**
(45) Date of publication and mention of the grant of the patent: **28.06.2023**
(21) Application number: 16901035.2
(22) Date of filing: 29.12.2016
(51) Int. Cl.: G06F 3/14, G09G 5/08

(54) **FRAME DROP PROCESSING METHOD AND SYSTEM FOR PLAYED PPT**
FRAME-DROP-VERARBEITUNGSVERFAHREN UND SYSTEM FÜR PPT-WIEDERGABE
PROCÉDÉ ET SYSTÈME DE TRAITEMENT D'ABANDON DE TRAME POUR PPT LUS

(30) Priority: 04.05.2016 CN 201610294480
(43) Date of publication of application: 13.03.2019
(73) Proprietor: Guangzhou Shirui Electronics Co., Ltd., Guangzhou, Guangdong 510663 (CN)
(72) Inventor: CHEN, Shitong, Guangzhou Guangdong 510663 (CN)
(74) Representative: dompatent von Kreisler Selting Werner - Partnerschaft von Patent- und Rechtsanwälten mbB
(86) International application number: PCT/CN2016/113214
(87) International publication number: WO 2017/190514

(56) References cited:
- CN-A- 101 297 366
- CN-A- 104 503 674
- CN-A- 104 571 851
- CN-A- 105 955 688
- US-A1- 2004 017 939
- US-A1- 2004 222 995
- US-A1- 2011 221 898
- US-A1- 2014 359 452
- "Direct3D 10 programming guide excerpts", ACM SIGGRAPH 2007 COURSES ON, SIGGRAPH '07, ACM PRESS, NEW YORK, NEW YORK, USA, 5 August 2007 (2007-08-05), pages 369-446, XP058244738, DOI: 10.1145/1281500.1281584 ISBN: 978-1-4503-1823-5

## Description

### TECHNICAL FIELD

The present invention relates to the technical field of image processing, in particular, to a method and system for performing a screen capture on a display interface of a display device when a Microsoft Office Power Point PPT is played in full-screen in a Microsoft DirectX Graphics Infrastructure DXGI screen capturing mode.

### BACKGROUND

PPT (Microsoft Office PowerPoint, Microsoft Office PowerPoint) is Microsoft's presentation software. A user can display a presentation on a projector or a computer, as well as print the presentation to make a film for using in a wider range of fields. PPT not only can be used to create a presentation, but also can display the presentation to the audience on face-to-face meeting, teleconference or internet.

In the Microsoft operating system, when performing a screen capture operation on the display interface of a display device, a user usually implements the screen capture operation through the Microsoft system's built-in rendering system DXGI screen capturing module, which has the characteristics of high screen capture efficiency, etc.

However, as users' demand to screen capture quality of PPT is getting higher and higher, users gradually find that although the DXGI screen capturing mode in the Microsoft system can perform screen capture efficiently, there is a problem of frame dropping when PPT is played in the DXGI screen capturing mode. US 2004/0017939 describes a method of and system for digital video and image compression, particularly relating to segmentation into continuous tone and palettized regions.

### SUMMARY

In view of the above, it is necessary to provide a method and system to effectively handle the problem of frame dropping when PPT is played in a DXGI screen capturing mode.

According to a first aspect the present invention provides: A computer system comprising a computer adapted for performing a screen capture on a display interface of a display device when a Microsoft Office Power Point PPT is played in full-screen in a Microsoft DirectX Graphics Infrastructure DXGI screen capturing mode, wherein the system further comprises the features according to claim 1.

According to a second aspect the present invention provides: A method for performing by the computer system according to the first aspect of the present invention, a screen capture on a display interface of a display device when a Microsoft Office Power Point PPT is played in full-screen in a Microsoft DirectX Graphics Infrastructure DXGI screen capturing mode, wherein the method comprises the steps according to claim 3.

### BRIEF DESCRIPTION OF DRAWINGS

Figure. 1 is a schematic flowchart of a first embodiment of a method for handling frame dropping of a system during playing PPT according to the present disclosure;
Figure 2 is a schematic flowchart of a second embodiment of a method for handling frame dropping of a system during playing PPT according to the present disclosure;
Figure 3 is a schematic structure diagram of a first embodiment of a system for handling frame dropping of a system during playing PPT according to the present disclosure;
Figure 4 is a schematic structure diagram of a second embodiment of a system for handling frame dropping of a system during playing PPT according to the present disclosure.

### DESCRIPTION OF EMBODIMENTS

A DXGI screen capturing module is a built-in functional module in the Microsoft system, the DXGI screen capturing module can perform screen capturing efficiently. The working principle of the DXGI screen capturing module is to send changed image data, and no data would be sent if there is no changed image data, therefore, when the PPT is displayed in a full-screen and the screen is not changed, acquisition of PPT image data by DXGI will be slower by one frame, which is the root cause of the frame dropping when PPT is played in a DXGI screen capturing mode. In the method and system of the present invention for handling the frame dropping of a displaying entity during playing PPT according to the present invention, in view of the above-mentioned working principle of the DXGI screen capturing module, a screen data is monitored, and a duration during which the screen data does not change is determined; and the screen data is modified when the duration exceeds a preset threshold. When the screen data changes, DXGI screen capture collects the image data of the current frame of PPT immediately (capturing the screen) and pushes the image data to the user, thereby effectively solving the problem of dropping one frame when PPT is played in the DXGI screen capturing mode.

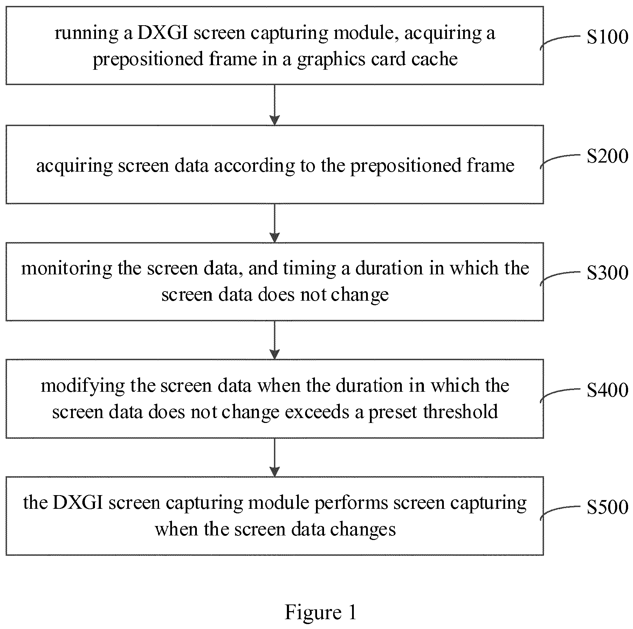

As shown in Figure 1A, a method for handling frame dropping of a displaying entity when playing PPT , comprises the following steps :
S 100: running a DXGI screen capturing module, acquiring a prepositioned frame in a graphics card cache.

The Microsoft system refers to a operating system developed by the Microsoft Corporation, such as a series of Windows operating systems, these operating systems can be operated in a computer or smart terminal (tablet computer). A DXGI screen capturing module is built in all Microsoft systems. The DXGI screen capturing module is an image rendering tool of the Microsoft system, and enables efficiently screen capturing. DXGI screen capturing module is run to acquire a prepositioned frame in a graphics card cache of a display device, where the prepositioned frame records the data from screen capturing of the current display interface.

S200: acquiring screen data according to the prepositioned frame.

Data to be presented in the next frame is recorded in the prepositioned frame, and the screen data can be acquired from these data.

S300: monitoring the screen data, and timing a duration during which the screen data does not change.

The screen data is monitored, and the duration during which the screen data does not change is determined, where the starting point of the timing is the time when the last PPT screen capture was completed.

S400: modifying the screen data when the duration during which the screen data does not change exceeds a preset threshold.

The preset threshold is a preset value which may be set according to historical experience data or current application scenario, for example, the preset threshold may be set to 1/10 second. Since the working principle of the DXGI screen capturing module is merely sending changed image data and not sending unchanged image data, in order to ensure no frame dropping occurs when PPT is played in the DXGI screen capturing mode, the screen data is actively modified when the duration during which the screen data does not change exceeds the preset threshold, so that the DXGI screen capturing module can detect that the screen data has changed. There are various ways to modify the screen data, for example, finely adjusting the cursor position on the screen to modify the screen data, and for another example, adjusting brightness and/or color of one pixel or a part of pixels on the screen to modify the screen data. When the duration during which the screen does not change does not exceed the preset threshold, the screen data is not modified.

S500: the DXGI screen capturing module performs screen capturing when the screen data changes.

When detecting that the screen data is changed, the DXGI screen capturing module performs screen capturing immediately.

In the method of handling the frame dropping of a displaying entity during playing PPT according to the present invention, the DXGI screen capturing module is run ; a prepositioned frame in a graphics card cache is acquired; screen data is acquired according to the prepositioned frame; the screen data is monitored and the duration during which the screen data does not change is determined; the screen data is modified when the duration exceeds a preset threshold; screen capture is performed by the DXGI screen capturing module when the screen data changes. During the whole process, when the duration during which the screen data does not change exceeds the preset threshold, the screen data is actively modified, so that the frame dropping of the DXGI screen capturing module may be avoided when the screen data is not changed, thereby enabling effective handling of the frame dropping of a displaying entity during playing PPT.

In one of the embodiments, a specific step of modifying the screen data when the duration during which the screen data does not change exceeds the preset threshold is:
modifying the screen data when the duration during which the screen data does not change exceeds the preset threshold.

The modifying the screen data means that the modified screen data can be restored to the screen data before modifying. For example, when the screen data is modified in the way of moving the cursor on the screen, a position of the cursor is slightly moved, the screen data is accordingly changed, and then the cursor is returned to its original position so that the screen data is restored to the screen data before modifying; when the screen data is modified in the way of modifying the brightness and/or color of one pixel or a part of pixels on the screen, one pixel or a part of pixels on the screen is/are changed, the screen data is accordingly changed, and then the brightness and/or color of the one pixel or the part of pixels is/are immediately restored so that the screen data is restored to the screen data before modifying. The modifying the screen data can ensure there is no perception at the user experience level on the premise of effectively modifying the screen data.

In one of the embodiments, a specific step of the modifying the screen data when the duration during which the screen data does not change exceeds a preset threshold is:
controlling, when the duration during which the screen data does not change exceeds a preset threshold, the cursor on the screen to move by a preset distance and then return to its original position so that the screen data is modified.

The process of the above embodiments will be described in detail based on three time points. Assuming that there are three consecutive time points: a first time point, a second time point and a third time point. At the first time point, the duration during which the screen data does not change exceeds the preset threshold, the cursor on the screen is controlled to move by a preset distance. The second time point is a time point when the cursor is moved by the preset distance, and at this time, the screen data has already been modified, and then the cursor is returned to the original position (the position of the cursor at the first time point). The third time point is a time point when the cursor is returned to the original position. In the above process, the screen data is the same at the first and third time points, and the screen data is modified at the second time point, which can be detected by the DXGI screen capturing module and then the DXGI screen capturing module may perform screen capturing. It should be noted that, the intervals between the three time points are very small (for example, only one ten thousandth of one frame), and the smaller the intervals between the three time points are, the more the perception at the user experience level can be reduced.

In one of the embodiments, before the step of controlling, when the duration during which the screen data does not change exceeds a preset threshold, the cursor on the screen to move by a preset distance and then return to its original position so that the screen data is modified, the method further includes:
determining the preset distance to be 5 pixels.

In this embodiment, the preset distance is 5 pixels. It is proved by many experiments that the modified screen data can be effectively detected by the DXGI screen capturing module when the cursor is moved by 5 pixels, and furthermore a distance of 5 pixels is very small, the user will not perceive the movement of the cursor, which ensures there is no perception at the user experience level, and thereby bring a good user experience.

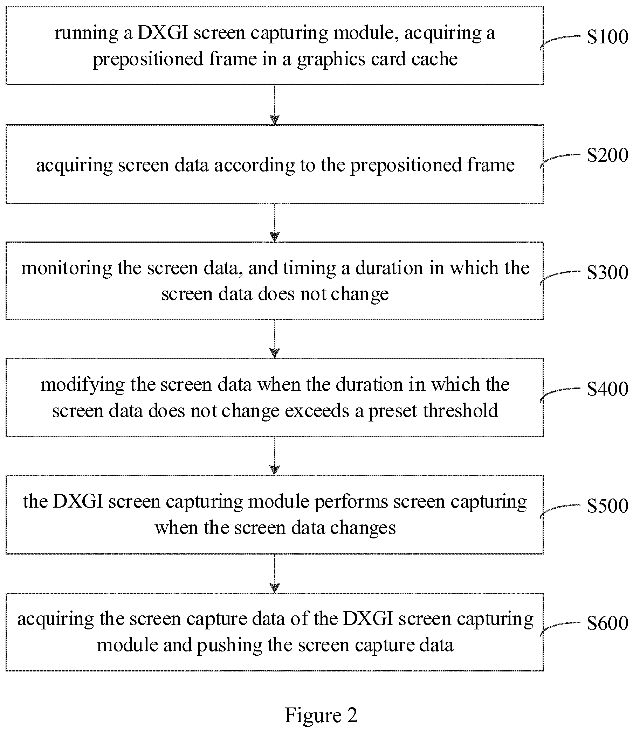

As shown in Figure 2, in one of the embodiments, the method for handling the frame dropping of a displaying entity when playing PPT further includes:
S600: acquiring the screen capture data of the DXGI screen capturing module and pushing the screen capture data.

The DXGI screen capturing module acquires the screen capture data after capturing screen, and pushes the screen capture data to a user or a desktop of a display device, for example, a display desktop of a computer.

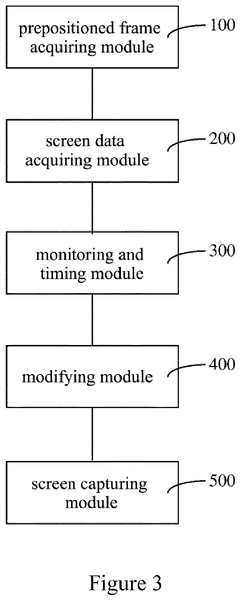

As shown in Figure 3, a system for handling frame dropping of a displaying entity when playing PPT comprises:
a prepositioned frame acquiring module 100 configured to run a DXGI screen capturing module, acquiring a prepositioned frame in a graphics card cache;
a screen data acquiring module 200 configured to acquire screen data according to the prepositioned frame;
a monitoring and timing module 300 configured to monitor the screen data and determine a duration during which the screen data does not change;
a modifying module 400 configured to modify the screen data when the duration during which the screen data does not change exceeds a preset threshold;
a screen capturing module 500 configured to run the DXGI screen capturing module to perform screen capturing when the screen data changes.

In the system for handling frame dropping of a displaying entity during playing PPT according to the present invention, the prepositioned frame acquiring module 100 run the DXGI screen capturing module and acquire a prepositioned frame in a graphics card cache; the screen data acquiring module 200 acquires screen data according to the prepositioned frame; the monitoring and timing module 300 monitors the screen data and determines the duration during which the screen data does not change; the modifying module 400 modifies the screen data when the duration exceeds the preset threshold; the screen capturing module 500 runs the DXGI screen capturing module to perform screen capturing when the screen data changes. In the whole process, the screen data is actively modified when the duration during which the screen data does not change exceeds the preset threshold, so that frame dropping of the DXGI screen capturing module may be avoided when the screen data is not changed, thereby enabling effective handling of the frame dropping of a displaying entity during playing PPT.

In one of the embodiments, the modifying module 400 is specifically configured to modify the screen data when the duration during which the screen data does not change exceeds the preset threshold.

Modifying the screen data by the modifying module 400 means that the screen data modified by the modifying module 400 can be restored by the modifying module 400 to the screen data before modifying. For example, when the screen data is modified in the way of moving the cursor on the screen, the position of the cursor is moved slightly, the screen data is accordingly changed, and then the cursor is returned to the original position so that the screen data is restored to the screen data before modifying; and when the screen data is modified in the way of modifying the brightness and/or color of one pixel or a part of pixels on the screen, the brightness and/or color of one pixel or a part of pixels on the screen is is/are changed, the screen data is accordingly changed, and then the brightness and/or color of the one pixel or the part of pixels is/are restored immediately so that the screen data is restored to the screen data before modifying. The modifying the screen data can ensure there is no perception at the user experience level on the premise of effectively modifying the screen data.

In one of the embodiments, the modifying module 400 is specifically configured to modify the screen data by controlling the cursor on the screen to move by a preset distance and then return to its original position when the duration during which the screen data does not change exceeds a preset threshold.

The process of implementation of the function of the modifying module 400 will be described in detail based on three time points. Assuming that there are three consecutive time points: a first time point, a second time point and a third time point. At the first time point, the duration during which the screen data does not change exceeds the preset threshold, the cursor on the screen is controlled to move by a preset distance. The second time point is a time point when the cursor is moved by the preset distance, and at this time, the screen data has already been modified, and then the cursor is returned to the original position (the position of the cursor at the first time point). The third time point is a time point when the cursor is returned to the original position. In the above process, the screen data is the same at the first and third time points, and the screen data is modified at the second time point, which may be detected by the DXGI screen capturing module and then the DXGI screen capturing module may perform screen capturing. It should be noted that, the intervals between the three time points are very small (for example, only one third of one frame), and the smaller the intervals between the three time points are, the more the perception at the user experience level can be reduced

In one of the embodiments, the system for handling frame dropping of a displaying entity during playing PPT further includes:
a preset distance determining module configured to determine the preset distance to be 5 pixels.

In this embodiment, the preset distance is 5 pixels. It is proved by many experiments that the modified screen data can be effectively detected by the DXGI screen capturing module when the cursor is moved by 5 pixels, and furthermore a distance of 5 pixels is very small, the user will not perceive the movement of the cursor, which ensures there is no perception at the user experience level, and thereby bring a good user experience.

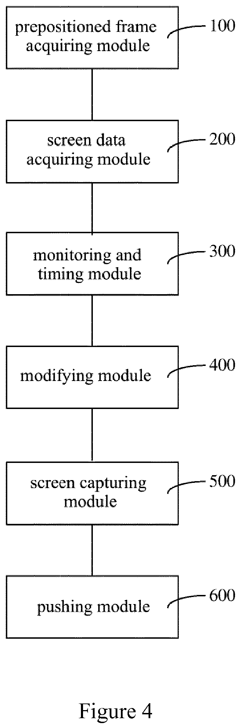

As shown in Figure 4, in one of the embodiments, the system for handling frame dropping of a displaying entity during playing PPT further comprises:
a pushing module 600 configured to acquire the screen capture data of the DXGI screen capturing module and push the screen capture data.

The screen capture data can be acquired after the screen capture of the DXGI screen capturing module, and the pushing module 600 pushes the screen capture data to a user or a desktop of a display device, for example, a display desktop of a computer.

The above-mentioned embodiments are merely illustrative of several embodiments of the invention, and the description thereof is relatively specific and detailed, but is not to be construed as limiting the scope of the invention. It should be noted that a number of variations and modifications may be made by those skilled in the art. These variations and modifications are all within the scope of the invention. The scope of the invention should be subject to the appended claims.

## Claims

1. A computer system comprising a computer adapted for performing a screen capture on a display interface of a display device when a Microsoft Office Power Point PPT is played in full-screen in a Microsoft DirectX Graphics Infrastructure DXGI screen capturing mode, wherein the system further comprises:
a prepositioned frame acquiring module (100) configured to run a DXGI screen capturing module, and to acquire a prepositioned frame in a graphics card cache of the display interface of the display device;
a screen data acquiring module (200) configured to acquire screen data according to the prepositioned frame;
a monitoring and timing module (300) configured to monitor whether the screen data are changed and determine a duration during which the screen data do not change;
a modifying module (400) configured to modify the screen data in the graphics cache when the duration in which the screen data does not change exceeds a preset threshold, wherein the modifying module is configured to modify the screen data in a way that modified screen data is restored to the screen data before the modification by controlling the cursor on the screen to move by a preset distance and then return to its original position, or
by changing the brightness and/or color of one pixel or a part of pixels on the screen and then restoring the brightness and/or color of the one pixel or the part of pixels;
a screen capturing module (500) configured to run the DXGI screen capturing module to perform screen capturing of the modified screen data in the graphics cache when the screen data changes; and
a pushing module (600) configured to acquire the screen data captured by the DXGI screen capturing module and push the captured screen data to a desktop of a display device.

2. The computer system according to claim 1, wherein the modifying module is configured to modify the screen data by controlling the cursor on the screen to move by a preset distance, the system further comprising:
a preset distance determining module configured to determine the preset distance to be 5 pixels.

3. A method for performing by the computer system of claim 1, a screen capture on a display interface of a display device when a Microsoft Office Power Point PPT is played in full-screen in a Microsoft DirectX Graphics Infrastructure DXGI screen capturing mode, wherein the method comprises the following steps:
acquiring (S100), by the prepositioned frame acquiring module, a prepositioned frame in a graphics card cache of the display interface of the display device;
acquiring (S200), by the screen data acquiring module, screen data in the prepositioned frame;
monitoring (S300), by the monitoring and timing module, whether the screen data are changed and determining a duration during which the screen data do not change;
modifying (S400), by the modifying module, the screen data in a way that the modified screen data is restored to the screen data before modification when the duration during which the screen data do not change exceeds a preset threshold, wherein modifying comprises controlling the cursor on the screen to move by a preset distance and then return to its original position, or changing the brightness and/or color of one pixel or a part of pixels on the screen and the restoring the brightness and/or color of the one pixel or the part of pixels; and
performing (S500), by the screen capturing module, screen capturing of the modified screen data in the graphics cache by the DXGI screen capturing module when the screen data changes and
pushing (S600), by the pushing module, the captured screen data to a desktop of a display device.

4. The method according to claim 3, wherein, when the duration in which the screen data does not change exceeds the preset threshold, modifying the screen data comprises controlling a cursor on a screen to move by a preset distance , wherein the preset distance is 5 pixels.

## Patentansprüche

1. Computersystem mit einem Computer, welcher geeignet ist, eine Bildschirmaufzeichnung eines Displayinterface einer Displayvorrichtung durchzuführen, wenn Microsoft Office Power Point PPT in Vollbildschirmanzeige in einem Microsoft DirectX Graphics Infrastructure DXGI-Bildschirmaufzeichnungsmodus abgespielt wird, wobei das System ferner aufweist:
ein Modul (100) zum Erfassen vorpositionierter Frames, das dazu ausgebildet ist, ein DXGI-Bildschirmaufzeichnungsmodul zu betreiben, und einen vorpositionierten Frame in einem Grafikkartencache des Displayinterface der Displayvorrichtung zu erfassen;
ein Bildschirmdatenaufzeichnungsmodul (200), das dazu ausgebildet ist, Bildschirmdaten gemäß dem vorpositionierten Frame zu erfassen;
ein Überwachungs- und Zeitsteuerungsmodul (300), das dazu ausgebildet ist, zu überwachen, ob die Bildschirmdaten verändert werden, und eine Zeitdauer zu bestimmen, während welcher die Bildschirmdaten sich nicht verändern;
ein Modifizierungsmodul (400), das dazu ausgebildet ist, die Bildschirmdaten in dem Grafikcache zu modifizieren, wenn die Zeitdauer, in welcher die Bildschirmdaten sich nicht verändern, einen vorgegebenen Schwellenwert übersteigt, wobei das Modifizierungsmodul dazu ausgebildet ist, die Bildschirmdaten derart zu modifizieren, dass modifizierte Bildschirmdaten als die Bildschirmdaten vor der Modifizierung wiederhergestellt werden, indem der Cursor auf dem Bildschirm derart gesteuert wird, dass er sich um eine vorgegebene Strecke bewegt und danach in seine Ausgangsposition zurücckehrt, oder durch Ändern der Helligkeit und/oder der Farbe eines Pixels oder eines Teils von Pixeln auf dem Bildschirm und anschließendes Wiederherstellen der Helligkeit und/oder der Farbe des einen Pixels und/oder des Teils von Pixeln;
ein Bildschirmaufzeichnungsmodul (500), das dazu ausgebildet ist, das DXGI-Bildschirmaufzeichnungsmodul zu betreiben, um eine Bildschirmaufzeichnung der modifizierten Bildschirmdaten in dem Grafikcache durchzuführen, wenn sich die Bildschirmdaten ändern; und
ein Push-Modul (600), das dazu ausgebildet ist, die von dem DXGI-Bildschirmaufzeichnungsmodul aufgezeichneten Bildschirmdaten zu erfassen und die aufgezeichneten Bildschirmdaten auf einen Desktop einer Displayvorrichtung zu pushen.

2. Computersystem nach Anspruch 1, bei welchem das Modifizierungsmodul dazu ausgebildet ist, die Bildschirmdaten zu modifizieren, indem der Cursor auf dem Bildschirm derart gesteuert wird, dass er sich um eine vorgegebene Strecke bewegt, wobei das System ferner aufweist:
ein Modul zum Bestimmen der vorgegebenen Strecke, das dazu ausgebildet ist, die vorgegebene Strecke als 5 Pixel zu bestimmen.

3. Verfahren zur Ausführung einer Bildschirmaufzeichnung eines Displayinterface einer Displayvorrichtung durch das Computersystem nach Anspruch 1, wenn Microsoft Office Power Point PPT in Vollbildschirmanzeige in einem Microsoft DirectX Graphics Infrastructure DXGI-Bildschirmaufzeichnungsmodus abgespielt wird, wobei das Verfahren die folgenden Schritte aufweist:
Erfassen (S100), durch das Modul zum Erfassen vorpositionierter Frames, eines vorpositionierten Frames in einem Grafikkartencache des Displayinterface der Displayvorrichtung;
Erfassen (S200), durch das Bildschirmdatenaufzeichnungsmodul, von Bildschirmdaten in dem vorpositionierten Frame;
Überwachen (S300), durch das Überwachungs- und Zeitsteuerungsmodul, ob die Bildschirmdaten verändert werden, und Bestimmen einer Zeitdauer, während welcher die Bildschirmdaten sich nicht verändern;
Modifizieren (S400), durch das Modifizierungsmodul, der Bildschirmdaten derart, dass die modifizierten Bildschirmdaten als die Bildschirmdaten vor der Modifizierung wiederhergestellt werden, wenn die Zeitdauer, in welcher die Bildschirmdaten sich nicht verändern, einen vorgegebenen Schwellenwert übersteigt, wobei das Modifizieren das Steuern des Cursors auf dem Bildschirm derart, dass er sich um eine vorgegebene Strecke bewegt und danach in seine Ausgangsposition zurückkehrt, oder das Ändern der Helligkeit und/oder der Farbe eines Pixels oder eines Teils von Pixeln auf dem Bildschirm und das anschließende Wiederherstellen der Helligkeit und/oder der Farbe des einen Pixels und/oder des Teils von Pixeln aufweist; und
Durchführen (S500), durch das Bildschirmaufzeichnungsmodul, einer Bildschirmaufzeichnung der modifizierten Bildschirmdaten in dem Grafikcache durch das DXGI-Bildschirmaufzeichnungsmodul, wenn sich die Bildschirmdaten ändern; und
Pushen (S600), durch das Push-Modul, der aufgezeichneten Bildschirmdaten auf einen Desktop einer Displayvorrichtung.

4. Verfahren nach Anspruch 3, bei welchem, wenn die Zeitdauer, während der die Bildschirmdaten sich über einen vordefinierten Zeitraum nicht ändern, das Modifizieren der Bildschirmdaten das Steuern eines Cursors auf einem Bildschirm aufweist, derart, dass er sich um eine vorgegebene Strecke bewegt, wobei die vorgegebene Strecke 5 Pixel beträgt.

## Revendications

1. Système informatique comprenant un ordinateur conçu pour effectuer une capture d'écran sur une interface d'affichage d'un dispositif d'affichage lorsqu'un Microsoft Office PowerPoint PPT est lu en plein écran dans un mode de capture d'écran Microsoft DirectX Graphics Infrastructure DXGI, le système comprenant en outre :
un module d'acquisition de trame prépositionnée (100) configuré pour exécuter un module de capture d'écran DXGI, et pour acquérir une trame prépositionnée dans un cache de carte graphique de l'interface d'affichage du dispositif d'affichage ;
un module d'acquisition de données d'écran (200) configuré pour acquérir des données d'écran en fonction de la trame prépositionnée ;
un module de surveillance et de synchronisation (300) configuré pour surveiller si les données d'écran sont modifiées, et déterminer une durée pendant laquelle les données d'écran ne changent pas ;
un module de modification (400) configuré pour modifier les données d'écran dans le cache graphique lorsque la durée pendant laquelle les données d'écran ne changent pas dépasse un seuil prédéfini, le module de modification étant configuré pour modifier les données d'écran de telle manière que les données d'écran modifiées sont restaurées aux données d'écran avant la modification en commandant le curseur sur l'écran pour qu'il se déplace d'une distance prédéfinie puis revienne à sa position d'origine, ou
en changeant la luminosité et/ou la couleur d'un pixel ou d'une partie des pixels sur l'écran, puis en restaurant la luminosité et/ou la couleur du pixel ou de la partie des pixels ;
un module de capture d'écran (500) configuré pour exécuter le module de capture d'écran DXGI afin qu'il effectue une capture d'écran des données d'écran modifiées dans le cache graphique lorsque les données d'écran changent ; et
un module de diffusion sélective (600) configuré pour acquérir les données d'écran capturées par le module de capture d'écran DXGI et diffuser de manière sélective les données d'écran capturées sur un bureau d'un dispositif d'affichage.

2. Système informatique selon la revendication 1, dans lequel le module de modification est configuré pour modifier les données d'écran en commandant le curseur sur l'écran pour qu'il se déplace d'une distance prédéfinie, le système comprenant en outre :
un module de détermination de distance prédéfinie, configuré pour déterminer la distance prédéfinie comme étant de 5 pixels.

3. Procédé permettant au système informatique selon la revendication 1 d'effectuer une capture d'écran sur une interface d'affichage d'un dispositif d'affichage lorsqu'un Microsoft Office PowerPoint PPT est lu en plein écran dans un mode de capture d'écran Microsoft DirectX Graphics Infrastructure DXGI, le procédé comprenant les étapes suivantes :
l'acquisition (S100), par le module d'acquisition de trame prépositionnée, d'une trame prépositionnée dans un cache de carte graphique de l'interface d'affichage du dispositif d'affichage ;
l'acquisition (S200), par le module d'acquisition de données d'écran, de données d'écran dans la trame prépositionnée ;
le fait de surveiller (S300), par le module de surveillance et de synchronisation, si les données d'écran sont modifiées, et la détermination d'une durée pendant laquelle les données d'écran ne changent pas ;
la modification (S400), par le module de modification, des données d'écran de telle manière que les données d'écran modifiées soient restaurées aux données d'écran avant modification lorsque la durée pendant laquelle les données d'écran ne changent pas dépasse un seuil prédéfini, la modification comprenant la commande du curseur sur l'écran pour qu'il se déplace d'une distance prédéfinie, puis retourne à sa position d'origine, ou le changement de la luminosité et/ou de la couleur d'un pixel ou d'une partie des pixels sur l'écran et la restauration de la luminosité et/ou de la couleur du pixel ou d'une partie des pixels sur l'écran ; et
la réalisation (S500), par le module de capture d'écran, de la capture d'écran des données d'écran modifiées dans le cache graphique par le module de capture d'écran DXGI lorsque les données d'écran changent et
la diffusion sélective (S600), par le module de diffusion sélective, des données d'écran capturées sur un bureau d'un dispositif d'affichage.

4. Procédé selon la revendication 3, dans lequel, lorsque la durée pendant laquelle les données d'écran ne changent pas dépasse le seuil prédéfini, la modification des données d'écran comprend la commande d'un curseur sur un écran pour qu'il se déplace d'une distance prédéfinie, la distance prédéfinie étant de 5 pixels.
